(19) Europäisches Patentamt
European Patent Office
Office européen des brevets

(11) **EP 3 084 317 B1**

(12) # FASCICULE DE BREVET EUROPEEN

(45) Date de publication et mention
de la délivrance du brevet:
**15.11.2017 Bulletin 2017/46**

(21) Numéro de dépôt: **14830973.5**

(22) Date de dépôt: **17.12.2014**

(51) Int Cl.:
***F24J 2/38*** (2014.01)

(86) Numéro de dépôt international:
**PCT/FR2014/053381**

(87) Numéro de publication internationale:
**WO 2015/092268 (25.06.2015 Gazette 2015/25)**

(54) **PROCEDE D'EVALUATION DES PARAMETRES DE PILOTAGE D'UN SUIVEUR SOLAIRE**

VERFAHREN ZUR BEURTEILUNG VON PARAMETERN ZUR STEUERUNG EINES SONNENFOLGERS

METHOD FOR ASSESSING PARAMETERS FOR CONTROLLING A SOLAR TRACKER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.12.2013 FR 1363097**

(43) Date de publication de la demande:
**26.10.2016 Bulletin 2016/43**

(73) Titulaire: **Exosun
33650 Martillac (FR)**

(72) Inventeurs:
• **PAPONNEAU, François**
**F-33610 Cestas (FR)**
• **LUCAS, Adrien**
**F-33000 Bordeaux (FR)**

(74) Mandataire: **Novagraaf Technologies
Bâtiment O2
2, rue Sarah Bernhardt
CS90017
92665 Asnières-sur-Seine Cedex (FR)**

(56) Documents cités:
EP-A1- 2 597 397      EP-A1- 2 660 739
JP-A- 2011 108 855      US-A1- 2013 048 048

• E. LORENZO ET AL: "Tracking and back-tracking", PROGRESS IN PHOTOVOLTAICS: RESEARCH AND APPLICATIONS, vol. 19, no. 6, 23 février 2011 (2011-02-23), pages 747-753, XP055025105, ISSN: 1062-7995, DOI: 10.1002/pip.1085

• YONG SIN KIM ET AL: "Optimal Spacing of Dual-axis Trackers for Concentrating Photovoltaic Systems", AIP CONFERENCE PROCEEDINGS, vol. 1407, 1 janvier 2011 (2011-01-01), pages 370-373, XP055040946, ISSN: 0094-243X, DOI: 10.1063/1.3658364

• YONG SIN KIM ET AL: "Modeling of a concentrating photovoltaic system for optimum land use", PROGRESS IN PHOTOVOLTAICS: RESEARCH AND APPLICATIONS, 1 octobre 2011 (2011-10-01), pages n/a-n/a, XP055040944, ISSN: 1062-7995, DOI: 10.1002/pip.1176

• L. NARVARTE ET AL: "Tracking and ground cover ratio", PROGRESS IN PHOTOVOLTAICS: RESEARCH AND APPLICATIONS, vol. 16, no. 8, 1 décembre 2008 (2008-12-01), pages 703-714, XP055025095, ISSN: 1062-7995, DOI: 10.1002/pip.847

• E. LORENZO ET AL: "Considerations in the design of a one-axis tracking photovoltaic system", PROGRESS IN PHOTOVOLTAICS: RESEARCH AND APPLICATIONS, vol. 2, no. 1, 1 janvier 1994 (1994-01-01), pages 45-55, XP055025119, ISSN: 1062-7995, DOI: 10.1002/pip.4670020107

• PANICO D ET AL: "Backtracking: a novel strategy for tracking PV systems", PROCEEDINGS OF THE PHOTOVOLTAIC SPECIALISTS CONFERENCE. LAS VEGAS, OCT. 7 - 11, 1991; [PROCEEDINGS OF THE PHOTOVOLTAIC SPECIALISTS CONFERENCE], NEW YORK, IEEE, US, vol. CONF. 22, 7 octobre 1991 (1991-10-07), pages 668-673, XP010039298, DOI: 10.1109/PVSC.1991.169294 ISBN: 978-0-87942-636-1

# Description

L'invention concerne un procédé d'évaluation des paramètres de pilotage d'un suiveur solaire.

Une centrale solaire est composée d'une série de suiveurs solaires, chaque suiveur solaire de la série étant composés d'un ensemble de modules solaires. Chaque module solaire comporte des moyens de traitement d'un rayonnement solaire. Lors de l'étude préalable de l'implantation de la centrale solaire, l'implantation des différents modules solaires, et par conséquent des différents suiveurs solaires, formant la centrale solaire est réalisé afin de minimiser les pentes entre les différents modules solaires de sorte à se rapprocher au maximum d'une implantation théorique idéale. Un carnet d'implantation est ainsi préalablement établi. Il est à noter que les pentes entre les différents modules solaires, quelle que soit la direction, peuvent augmenter les risques d'ombrage entre deux modules solaires adjacents et donc les phases de correction de suivi de la course diurne du Soleil au cours de la journée. Cela a pour conséquence directe de diminuer la production de la centrale solaire, et donc de réduire les performances énergétiques de la centrale.

Actuellement, afin d'optimiser les performances énergétiques de la centrale en recherchant à minimiser les pertes dues aux disparités du terrain d'implantation de l'ensemble des modules solaires composant la centrale solaire, un jeu de paramètres de pilotage global est prédéfini pour l'ensemble de la centrale solaire. Toutefois, un tel jeu de paramètres de pilotage global ne permet pas un pilotage optimisé de la centrale solaire du fait qu'un tel jeu de paramètre global appliqué à l'ensemble des modules solaires de la centrale solaire ne prend en compte que le positionnement relatif de deux modules solaires adjacents produisant le pire risque d'ombrage. Un tel pilotage de la centrale solaire ne permet pas d'optimiser au maximum les performances énergétiques de la centrale solaire.

Le document US2013/0048048 décrit un procédé d'évaluation des paramètres de pilotage d'une série de suiveurs solaires d'une centrale solaire.

Un but de l'invention est de fournir un procédé d'évaluation des paramètres de pilotage permettant d'optimiser encore plus les performances énergétiques d'une centrale solaire en minimisant les pertes dues aux disparités du terrain d'implantation des différents modules solaires de la centrale solaire.

A cet effet, il est prévu, selon l'invention, un procédé d'évaluation des paramètres de pilotage d'une série de suiveurs solaires d'une centrale solaire, chaque suiveur solaire de la série de suiveurs solaires comportant un ensemble de modules solaires, chaque module solaire comprenant une table de moyens de traitement d'un rayonnement solaire monté mobile à rotation autour d'un axe de rotation, poursuivre une course diurne du Soleil, sur des moyens de liaison au sol, le procédé comportant des étapes de :

a - relever, pour chacun des moyens de liaison au sol, des coordonnées dans l'espace d'un point de liaison avec la table ;

b - pour chacun des modules solaires :

    i. Détermination d'une inclinaison de la table associée à partir des coordonnées dans l'espace relevées des moyens de liaison au sol de la table associée ;

    ii. Détermination des coordonnées d'une série de points de référence de la table associée à partir des coordonnées dans l'espace des moyens de liaison au sol de la table associée et de l'inclinaison de la table associée ;

c - détermination, pour chacun des modules solaires, d'un ensemble de paramètres de positionnement relatif de la table associée avec des tables voisines directes de la table associée de la centrale solaire, à partir des coordonnées dans l'espace des séries de points de référence des tables considérées ;

d - détermination, pour chacun des suiveurs solaires de la série de suiveurs solaire, des paramètres de pilotage du suiveur solaire considéré à partir de l'inclinaison et de l'ensemble des paramètres de positionnement relatif des tables de l'ensemble des modules solaires du suiveur solaire considéré.

Ainsi, le relevé, pour chacun des moyens de liaison au sol, des coordonnées dans l'espace d'un point de liaison avec la table permet de déterminer le positionnement réel des différentes tables de la centrale solaire et de calculer des paramètres de pilotages propres à chacun des suiveurs solaires qui forment la centrale solaire. En conséquence, chaque suiveur solaire de la série de suiveurs solaires est piloté de manière indépendante, ce qui permet d'optimiser au maximum les performances énergétiques de la centrale solaire en minimisant les pertes énergétiques des risques d'ombrage dus aux disparités du terrain d'implantation de la centrale solaire.

Avantageusement, mais facultativement, le procédé selon l'invention présente au moins l'une des caractéristiques techniques supplémentaires suivantes :

-   l'inclinaison est évaluée par rapport à une horizontale ;

-   la série de points de référence comporte un point d'un bord Nord de la table, un point central de la table et un point d'un bord Sud de la table ;

-   les trois points sont alignés selon un axe Nord-Sud ;

-   lors de l'étape C, les tables voisines directes considérées sont celles qui présentent un risque d'ombrage sur la table associée lors de la course diurne du Soleil ;

- l'ensemble des paramètres de positionnement relatif comporte des valeurs de différence de hauteur entre les bords Nord et Sud de la table associée et les bords en regard des tables voisines directes ;

- Les paramètres de pilotage du suiveur solaire considéré comportent des valeurs maximales des valeurs de différence de hauteur répartie par positionnement relatif de la table associée et de la table voisine directe considérée ;

- les paramètres de pilotage du suiveur solaire considéré comportent des valeurs minimales des valeurs de distance répartie par positionnement relatif de la table associée de la table voisine directe considérée ; et,

- les paramètres de pilotage du suiveur solaire considéré comportent une valeur moyenne des inclinations des tables de l'ensemble des modules solaires du suiveur solaire considéré.

D'autres caractéristiques et avantages de l'invention apparaîtront lors de la description ci-après d'un mode de réalisation du procédé selon l'invention. Aux dessins annexés

- la figure 1 est une vue schématique de dessus d'une implantation d'une centrale solaire ;
- la figure 2 est une vue schématique illustrant la détermination de l'inclinaison dans le procédé selon l'invention ;
- les figures 3A et 3B et 4 sont des vues schématiques illustrant la détermination d'une série de points de référence selon le procédé selon l'invention ;
- les figures 5 à 13 sont des vues schématiques illustrant la détermination d'un ensemble de paramètres de positionnement relatif selon le procédé selon l'invention ;
- la figure 14 illustre 1 exemple de tableaux obtenus par le procédé selon l'invention ; et,
- la figure 15 est un organigramme illustrant 1 processus d'implantation d'une centrale solaire, le processus comportant le procédé selon l'invention.

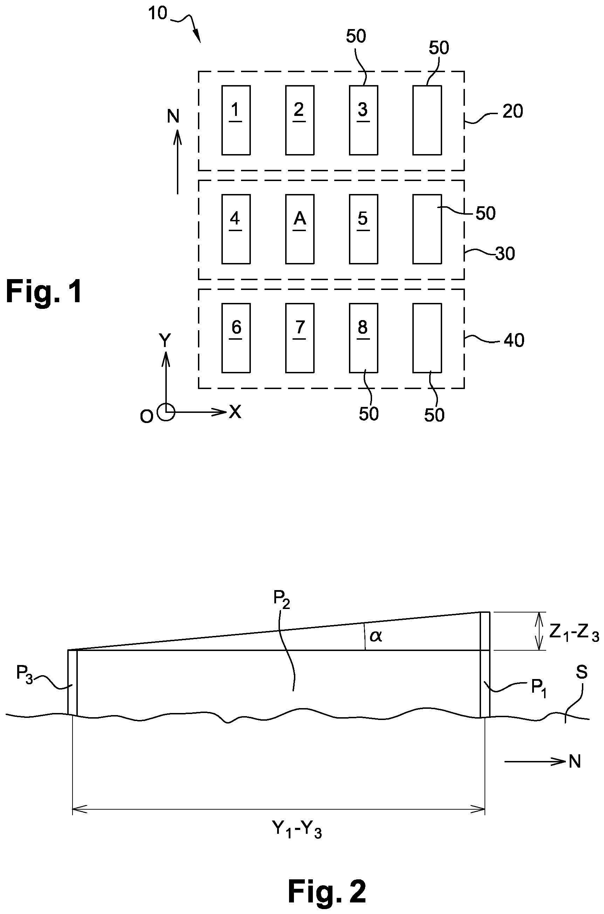

En référence aux différentes figures 1 à 15, nous allons décrire un procédé d'évaluation des paramètres de pilotage selon l'invention. Cette description est effectuée en considérant une centrale solaire comportant un ensemble de modules solaires dits « un axe » comprenant chacun une table formée de moyens de traitement d'un rayonnement solaire. Chacune des tables est montée mobile à rotation selon un axe sensiblement horizontal sur un ensemble de trois pieux alignés sensiblement selon une direction Nord-Sud. De tels modules sont décrits plus en détail dans le document FR2992403, auxquelles il est possible de ce référé pour de plus amples informations. Toutefois le procédé de pilotage selon l'invention qui va être décrit peut s'appliquer à d'autres types de modules solaires formant une centrale solaire. En particulier, le procédé d'évaluation des paramètres de pilotage selon l'invention peut s'appliquer à des modules solaires dits « deux axes », ainsi qu'à des suiveurs solaires comportant de un à plusieurs modules solaires pilotés par une même commande de pilotage.

À la figure 1, une centrale solaire 10 comporte ici trois suiveurs solaires 20, 30, 40. Chacun des suiveurs solaires 20, 30, 40 comportent un ensemble de modules solaires 50, ici au nombre de quatre. Chacun des modules solaires 50 comporte une table 1, 2, 3, 4, 5, 6, 7, 8, A formée de moyens de traitement d'un rayonnement solaire. Ces tables sont de forme rectangulaire et orientées selon une direction Nord-Sud. Chacune des tables est montée mobile en rotation autour d'un axe de rotation sur des moyens de liaison au sol P1, P2, P3, qui sont ici des pieux battus dans un sol S sur lequel la centrale solaire 10 est implantée. De tels moyens de liaison au sol sont illustrés par exemple à la figure 2.

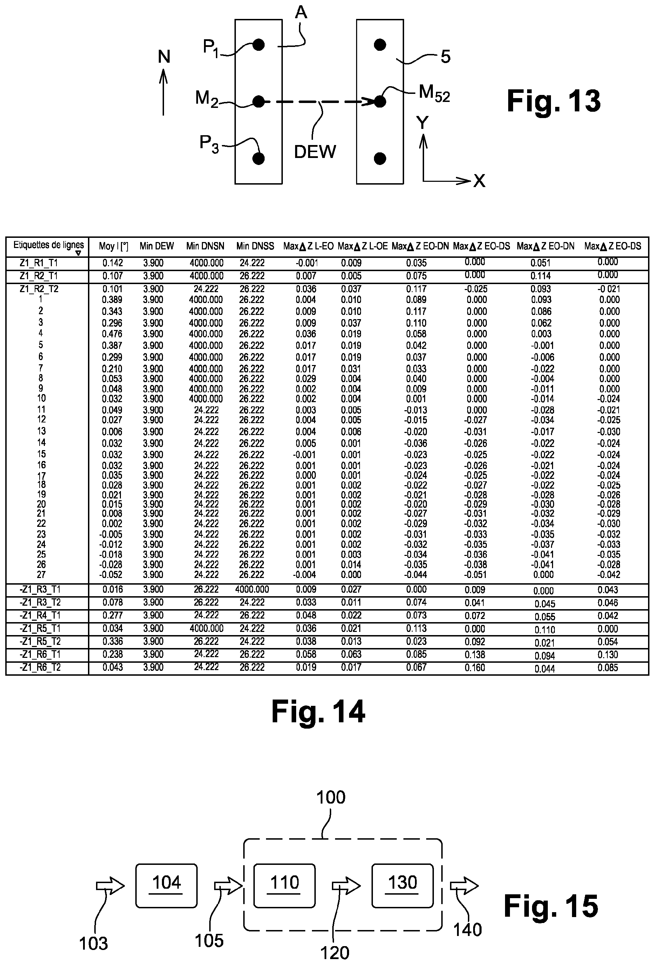

En référence à la figure 15, l'implantation de la centrale solaire 10 est d'abord effectuée de manière théorique lors d'une étude 103, ce qui permet d'établir un cahier d'implantation 104. Ce cahier d'implantation 104 est mis en oeuvre sur le terrain d'implantation de la centrale solaire 10 lors d'un chantier 105 au cours duquel l'ensemble des moyens de liaison au sol P1, P2, P3, sont implantés dans le sol S sur lequel la centrale solaire 50 est installée.

Il est à noter que les disparités du sol S illustré aux figures 2, 3a, 3b et 7 à 12 sont volontairement amplifiées dans un but purement illustratif du propos qui suit.

Une fois le chantier 105 terminé ou au fur et à mesure de celui-ci, une première étape 110 du procédé d'évaluation des paramètres de pilotage 100 selon l'invention est réalisée. Cette étape 110 consiste en un relevé, pour chacun des moyens de liaison au sol P1, P2, P3, des coordonnées dans l'espace d'un point de liaison avec la table qui est ensuite montée mobile en rotation autour d'un axe sur ce moyen de liaison. Dans le cas des modules solaires « un axe » illustrés ici, il s'agit des sommets d'une extrémité libre des pieux P1, P2, P3. Ces coordonnées dans l'espace sont un repère terrestre orthonormé (O, X,Y,Z). De manière générale, ce repère est, par calcul si nécessaire, un repère centré au Sud-Ouest de la centrale solaire 10, dont l'axe Y est dans le sens de la longueur des tables 1,2,3,4,5,6,7,8,A et l'axe Z est colinéaire à une normale du terrain naturel représenté par le sol S. Le type de calcul a effectué dépend du rapport du géomètre et de ses hypothèses concernant le site d'implantation de la centrale solaire 10.

L'ensemble de ces coordonnées dans l'espace d'un point de liaison avec la table forme un cahier de récolement 120. A partir de ce cahier de récolement 120, le procédé d'évaluation des paramètres de pilotage 100 selon l'invention détermine, dans une étape globale 130, un ensemble de paramètres pilotages 140 associé à chacun des suiveurs solaires 20, 30, 40 formant la centrale solaire 50.

En référence aux figures 2 à 13, nous allons maintenant décrire en détail les différents paramètres de pilotage 140 déterminés par le procédé d'évaluation des paramètres de pilotage 100 selon l'invention.

Dans un premier temps, le procédé d'évaluations des paramètres de pilotage selon l'invention comporte une étape de calculs préliminaires. Cette étape permet de caractériser chaque table 1,2,3,4,5,6,7,8,A qui fait partie de la centrale solaire 10 et donc des différents suiveurs solaires 20,30,40. Chaque table A est alors repérée complètement dans l'espace. Grâce aux coordonnées (X, Y, Z) dans l'espace des points de liaison avec la table A des pieux P1,P2,P3 dans le carnet de récolement, un simple calcul permet de repérer les bords Nord et Sud des tables, ainsi que leur inclinaison. Ce calcul dépend des dimensions des tables qui sont préalablement connues.

Dans le cadre illustrant le procédé d'évaluation des paramètres de pilotage 100 selon l'invention, l'inclinaison de la table A est définie comme étant l'angle $\alpha$ entre une droite passant par le sommet formant point de liaison avec la table A des pieux extrêmes P1, P3, et une horizontale passant par ces mêmes pieux comme cela est illustrer en figure 2. Les sommets respectifs des pieux P1 et P3 ont pour coordonnées dans l'espace respectives $(X_1,Y_1,Z_1)$ et $(X_3,Y_3,Z_3)$.

L'inclinaison $\alpha$ de chaque table A est alors déterminée à l'aide de l'altitude $Z_1,Z_3$ des sommets des pieux P1,P3 et d'une distance $Y_1$-$Y_3$ entre ces deux pieux extrêmes P1,P3. L'inclinaison $\alpha$ est considérée positive lorsque la table A est orientée vers le Sud comme sur la figure 2; seuls les pieux extrêmes (P1 et P3) sont pris en compte dans le calcul. L'équation est :

$$\alpha = \text{Atan}(\frac{Z_1 - Z_3}{Y_1 - Y_3}) \qquad (1)$$

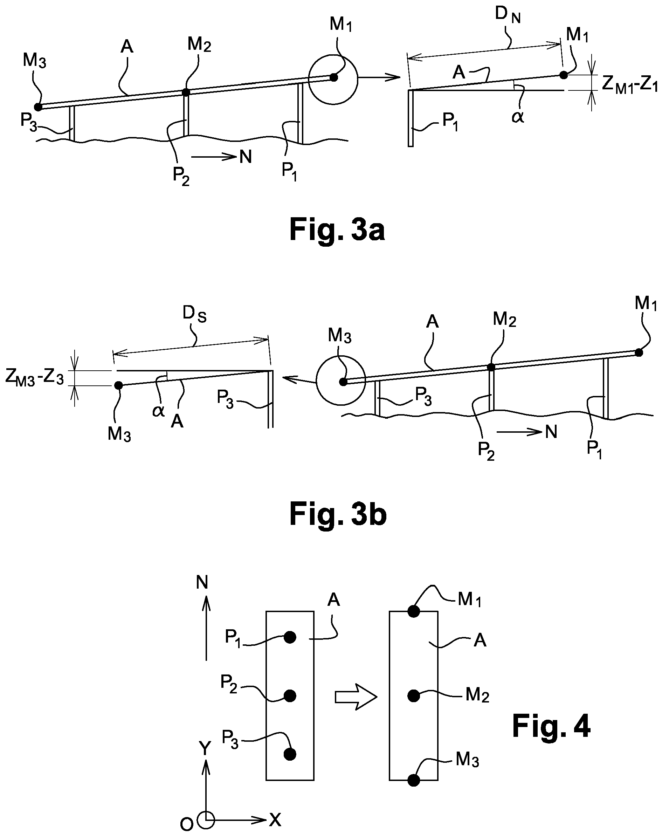

L'inclinaison $\alpha$ étant connue, des points de référence M1,M2,M3 pour chacune des tables A sont calculés, connaissant un débord Nord $D_N$ et un débord Sud $D_S$ de la table A. Ainsi, le point M1 est situé sur un bord Nord de la table A considérée et le point M3 est situé sur un bord Sud de la table A considérée, alors que le point M2 correspond au point de liaison avec la table A considérée du moyen de liaison P2, c'est-à-dire le sommet de l'extrémité libre du pieu P2 ici. Les figures 3a et 3b illustrent cette situation. Les équations permettant de passer des coordonnées dans l'espace des points de liaison avec la table A des moyens de liaison au sol P1, P2, P3 aux coordonnées dans l'espace des points de référence M1, M2, M3 associé à la table A considérée, illustrés en figure 4, sont :

$$X_{M1} = X_{M2} = X_{M3} = X_2 \qquad (2)$$

$$Y_{M1} = Y_1 + \cos(\alpha) \cdot D_N \qquad (3)$$

$$Y_{M2} = Y_2 \qquad (4)$$

$$Y_{M3} = Y_3 - \cos(\alpha) \cdot D_S \qquad (5)$$

$$Z_{M1} = Z_1 + \sin(\alpha) \cdot D_N \qquad (6)$$

$$Z_{M2} = Z_2 \qquad (7)$$

$$Z_{M3} = Z_3 - \sin(\alpha) \cdot D_S \qquad (8)$$

Les points de référence M1, M2, M3 sont donc alignés selon un axe Nord-Sud.

Lors du montage d'une table A, le pieu du milieu P2 sert de référence pour le positionnement Nord/Sud. En pratique, les défauts d'alignement des pieux P1,P2,P3 sont corrigés par des supports axe des pieux P1 et P3, comme cela est décrit dans le document FR 12 55956. Donc, l'abscisse X des points de référence M1,M2,M3 est considérée comme identique et égale à celle du pieu P2 (Equation 2).

A la fin de cette étape de calculs préliminaire, à chaque table A de l'ensemble des modules solaires 50 formant la centrale solaire 10 est associée une série de point de référence M1, M2, M3 (ici au nombre de trois).

Il convient désormais de repérer les tables A entre elles, c'est-à-dire de relever pour chaque table A les coordonnées des points de référence des tables voisines 1,2,3,4,5,6,7,8. De là, le procédé d'évaluation des paramètres de pilotage 100 selon l'invention va déterminer, pour chaque table A de l'ensemble de module solaires 50, un ensemble de paramètres de positionnement relatif de la table A considérée par rapport aux tables voisines directes 1,2,3,4,5,6,7,8 de ladite table A considérée.

Ces différents paramètres de positionnement relatif sont résumés dans le tableau suivant :

| Paramètres | Tables considérées |
|---|---|
| $\Delta zL$-OE | A - 5 |
| $\Delta zL$-EO | A - 4 |
| $\Delta z$OEDS | A - 3 |
| $\Delta z$EODS | A - 1 |
| $\Delta z$OEDN | A - 8 |
| $\Delta z$EODN | A - 6 |
| DEW | A - 5 |

| (suite) | |
|---|---|
| **Paramètres** | **Tables considérées** |
| DNSN | 2 - A |
| DNSS | A - 7 |

Les six premiers paramètres de positionnement relatifs du tableau correspondent à des différences de hauteurs $\Delta z$ entre la table A considérée et les tables voisines directes 1,3,4,5,6 et 8, respectivement situées au Nord-Ouest, au Nord-Est, à l'Est, à l'Ouest, au Sud-Ouest et au Sud-Est. Les trois derniers paramètres de positionnement relatifs du tableau correspondent à des distances entre la table A considérée et les tables voisines directes 2,5 et 7, respectivement situées au Nord, à l'Est et au Sud.

D'autre part, le cahier d'implantation 104 permet de connaître trois paramètres de positionnement relatif théoriques que sont :

- Dew$_{th}$ : Entraxe théorique entre une table et sa voisine à l'Est ou à l'Ouest

- Dnsn$_{th}$ : Distance théorique entre une table et sa voisine au Nord

- Dnss$_{th}$ : Distance théorique entre une table et sa voisine au Sud

Il est à noter que ces paramètres de positionnement relatif théoriques correspondent aux trois derniers paramètres de positionnement du tableau précédent.

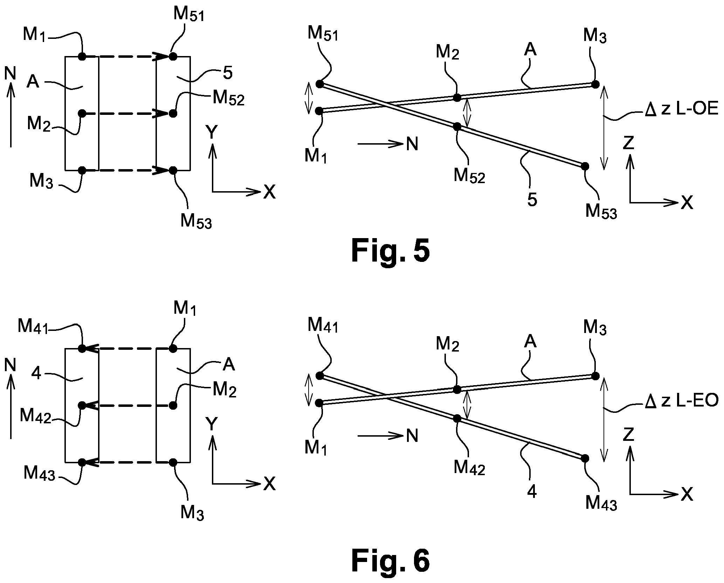

En référence aux figures 5 à 13, nous allons décrire le calcul pour chaque table A de l'ensemble de paramètres de positionnement relatifs associé, selon le procédé d'évaluation des paramètres de pilotage 100 selon l'invention.

Le paramètre $\Delta z$L-OE(figure 5) traduit une différence de hauteur entre deux tables implantées Ouest-Est sur la même ligne ; il est pris en compte dans une stratégie de pilotage de la centrale solaire 10 lorsque le Soleil se trouve à l'Ouest et que la table A risque de provoquer des ombrages sur la table 5 à l'Est. Le calcul de ce paramètre $\Delta z$L-OE est en fonction des hauteurs en bord de table. Pour chacun des trois points de référence M1,M2,M3 de la table A, les points de référence M51,M52,M53 de la table 5 à l'Est sont recherchés pour ensuite soustraire leur hauteur.

Le déroulement et les hypothèses du calcul, effectué pour chaque point de référence de l'ensemble des tables de la centrale solaire, sont les suivants :

- la recherche du point de référence de la table 5 située à l'Est est basée sur la comparaison de l'abscisse et de l'ordonnée des points. Notons i le numéro du point de référence M5i, i $\in$ {1,2,3} ;

- pour prendre en compte les tolérances de battage des pieux P1,P2,P3 et les incertitudes de calcul, un cercle de rayon 50 cm à l'intérieur duquel se trouve le pieu est défini ;

- les coordonnées $(X_{M5i}, Y_{M5i})$ du point de référence de la table 5 située à l'Est doivent vérifier :

$$\left| X_{M5_i} - X_{Mi} - Dew_{th} \right| < 0,5$$

$$\left| Y_{M5_i} - Y_{Mi} \right| < 0,5$$

Une fois le point de référence identifié M5i, le $\Delta z$ correspondant au même point de référence Mi de la table A considérée est calculé. Ce résultat est renseigné dans le tableau suivant :

| Table | Point de référence | $\Delta$zL-OE |
|---|---|---|
| A | M1 | $Z_{M_1} - Z_{M5_1}$ |
| A | M2 | $Z_{M_2} - Z_{M5_2}$ |
| A | M3 | $Z_{M_3} - Z_{M5_3}$ |

Le procédé d'évaluation des paramètres de pilotage 100 selon l'invention ne conserve alors que la valeur maximale parmi ces trois valeurs.

Le procédé passe à l'itération suivante, c'est-à-dire à la table suivante, balayant ainsi la totalité des tables de l'ensemble des modules solaires 50 de la centrale solaire 10. Pour les tables situées en bout de ligne à l'Est, aucune valeur n'est renseignée, puisque ces tables n'ont pas de voisines directes 5 à l'Est.

Concernant maintenant le paramètre $\Delta z$L-EO (figure 6), ce dernier traduit une différence de hauteur entre deux tables implantées Est-Ouest sur la même ligne ; il est pris en compte dans la stratégie de pilotage de la centrale solaire 10 lorsque le Soleil se trouve à l'Est et que la table A risque de provoquer des ombrages sur la table 4 à l'Ouest. Le calcul de ce paramètre $\Delta z$L-EO est, comme pour le précédent, en fonction des hauteurs en bord de table. Pour chacun des trois points de référence M1,M2,M3 de la table A, les points de référence M41,M42,M43 de la table 4 à l'Ouest sont recherchés pour ensuite soustraire leur hauteur.

De manière similaire que pour le paramètre $\Delta z$L-OE précédent, le déroulement et les hypothèses du calcul, effectué pour chaque point de référence de l'ensemble des tables de la centrale solaire, sont les suivants :

- la recherche du point de référence de la table 4 située à l'Ouest est basée sur la comparaison de l'abscisse et de l'ordonnée des points. Notons i le numéro du point de référence M4i, i $\in$ {1,2,3} ;

- pour prendre en compte les tolérances de battage des pieux P1,P2,P3 et les incertitudes de calcul, un cercle de rayon 50 cm à l'intérieur duquel se trouve le pieu est défini ;
- les coordonnées $(X_{M4i}, Y_{M4i})$ du point de référence de la table 4 située à l'Est doivent vérifier :

$$\left|X_{M4_i} - X_{Mi} - Dew_{th}\right| < 0,5$$

$$\left|Y_{M4_i} - Y_{Mi}\right| < 0,5$$

Une fois le point de référence identifié M4i, le $\Delta z$ correspondant au même point de référence Mi de la table A considérée est calculé. Ce résultat est renseigné dans le tableau suivant :

| Table | Point de référence | $\Delta zL$-EO |
|-------|--------------------|----------------|
| A | M1 | $Z_{M_1} - Z_{M4_1}$ |
| A | M2 | $Z_{M_2} - Z_{M4_2}$ |
| A | M3 | $Z_{M_3} - Z_{M4_3}$ |

De nouveau, le procédé d'évaluation des paramètres de pilotage 100 selon l'invention ne conserve alors que la valeur maximale parmi ces trois valeurs.

Le procédé passe à l'itération suivante, c'est-à-dire à la table suivante, balayant ainsi la totalité des tables de l'ensemble des modules solaires 50 de la centrale solaire 10. Pour les tables situées en bout de ligne à l'Ouest, aucune valeur n'est renseignée, puisque ces tables n'ont pas de voisines directes 4 à l'Ouest.

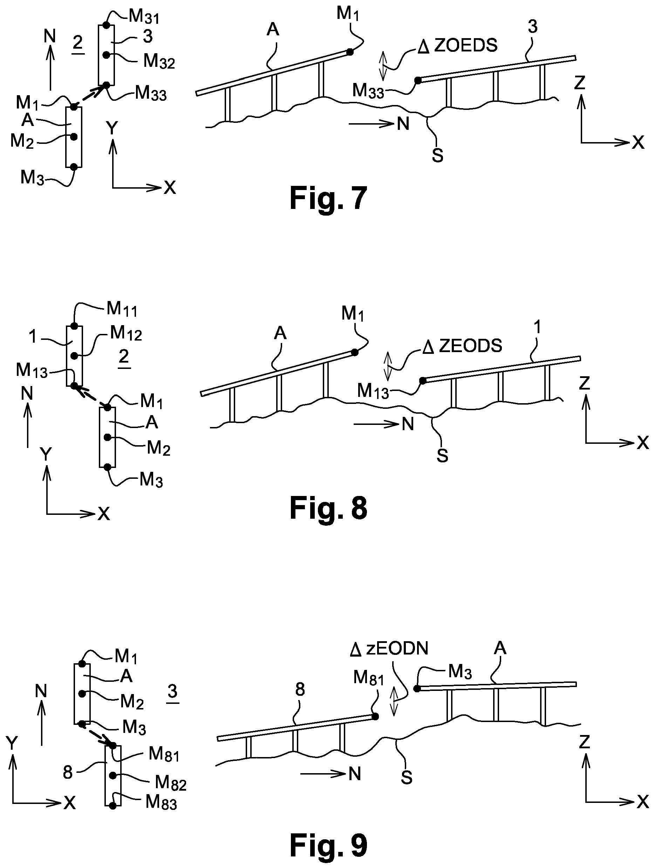

Pour le paramètre $\Delta zOEDS$ (figure 7), ce dernier traduit une différence de hauteur entre deux tables implantées en diagonale Nord-Est ; il est pris en compte dans la stratégie de pilotage de la centrale solaire 10 lorsque le Soleil se trouve au Sud-Ouest et que la table A risque de provoquer des ombrages sur la table 3 au Nord-Est. Le calcul de ce paramètre $\Delta zL$-EO est, comme pour les précédents, en fonction des hauteurs en bord de table. Pour le point de référence M1de la table A, le point de référence M33 de la table 3au Nord-Est est recherché pour ensuite soustraire leur hauteur. En effet, dans cette situation, le bord Nord de la table A étendu à l'Est est en regard du bord Sud de la table 3 au Nord-Est.

De manière similaire que pour les paramètres précédents, le déroulement et les hypothèses du calcul, effectué pour le point de référence M1 de l'ensemble des tables de la centrale solaire, sont les suivants :

- la recherche du point de référence de la table 3 située au Nord-Est est basée sur la comparaison de l'abscisse et de l'ordonnée des points;
- pour prendre en compte les tolérances de battage des pieux P1,P2,P3 et les incertitudes de calcul, un cercle de rayon 50 cm à l'intérieur duquel se trouve le pieu est défini ;
- les coordonnées $(X_{M33}, Y_{M33})$ du point de référence de la table 3 située au Nord-Est doivent vérifier :

$$\left|X_{M3_3} - X_{M1} - Dew_{th}\right| < 0,5$$

$$\left|Y_{M3_3} - Y_{M1} - Dnsn_{th}\right| < 0,5$$

Une fois le point de référence identifié M33, le $\Delta z$ par rapport au point de référence M1de la table A considérée est calculé : $\Delta zOEDS = Z_{M_1} - Z_{M3_3}$.

Le procédé passe à l'itération suivante, c'est-à-dire à la table suivante, balayant ainsi la totalité des tables de l'ensemble des modules solaires 50 de la centrale solaire 10. Pour les tables A n'ayant pas de voisine 3 au Nord-Est et/ou pour les points de référence M2 et M3, aucune valeur n'est renseignée.

Concernant maintenant le paramètre $\Delta zEODS$ (figure 8), il traduit une différence de hauteur entre deux tables implantées en diagonale Nord-Ouest; il est pris en compte dans la stratégie de pilotage de la centrale solaire 10 lorsque le Soleil se trouve au Sud-Est et que la table A risque de provoquer des ombrages sur la table 1 au Nord-Ouest. De nouveau, le calcul de ce paramètre $\Delta zEODS$ est en fonction des hauteurs en bord de table. Pour le point de référence M1 de chaque table A, le point de référence M13 de la table 1 au Nord-Ouest est recherché pour ensuite soustraire leurs hauteurs. En effet, dans cette situation, le bord Nord de la table A étendu à l'Ouest est en regard du bord Sud de la table 1 au Nord-Ouest.

Comme pour le paramètre précédent, le déroulement et les hypothèses du calcul, effectué pour le point de référence M1 de l'ensemble des tables de la centrale solaire, sont les suivants :

- la recherche du point de référence de la table 1 située au Nord-Ouest est basée sur la comparaison de l'abscisse et de l'ordonnée des points;
- pour prendre en compte les tolérances de battage des pieux P1,P2,P3 et les incertitudes de calcul, un cercle de rayon 50 cm à l'intérieur duquel se trouve le pieu est défini ;
- les coordonnées $(X_{M13}, Y_{M13})$ du point de référence de la table 1 située au Nord-Ouest doivent vérifier :

$$\left|X_{M1_3} - X_{M1} - Dew_{th}\right| < 0,5$$

$$\left|Y_{M1_3} - Y_{M1} - Dnsn_{th}\right| < 0,5$$

Une fois le point de référence identifié M13, le $\Delta z$ par rapport au point de référence M1 de la table A

considérée est calculé : $\Delta\mathbf{zEODS = Z_{M_1} - Z_{M13}}$.

Le procédé passe à l'itération suivante, c'est-à-dire à la table suivante, balayant ainsi la totalité des tables de l'ensemble des modules solaires 50 de la centrale solaire 10. Pour les tables A n'ayant pas de voisine 1 au Nord-Ouest et/ou pour les points de référence M2 et M3, aucune valeur n'est renseignée.

Nous allons, en référence à la figure 9, évaluer maintenant le paramètre $\Delta\text{zOEDN}$ qui traduit une différence de hauteur entre deux tables implantées en diagonale Sud-Est ; il est pris en compte dans la stratégie de pilotage de la centrale solaire 10 lorsque le Soleil se trouve au Nord-Ouest et que la table A risque de provoquer des ombrages sur la table 8 au Sud-Est. A nouveau, le calcul de ce paramètre $\Delta\text{zOEDN}$ est en fonction des hauteurs en bord de table. Pour le point de référence M3 de chaque table A, le point de référence M81 de la table 8 au Sud-Est est recherché pour ensuite soustraire leurs hauteurs. En effet, dans cette situation, le bord Sud de la table A étendu à l'Est est en regard du bord Nord de la table 8 au Sud-Est.

Comme précédemment, le déroulement et les hypothèses du calcul, effectué pour le point de référence M1 de l'ensemble des tables de la centrale solaire, sont les suivants :

- la recherche du point de référence de la table 8 située au Sud-Est est basée sur la comparaison de l'abscisse et de l'ordonnée des points;
- pour prendre en compte les tolérances de battage des pieux P1,P2,P3 et les incertitudes de calcul, un cercle de rayon 50 cm à l'intérieur duquel se trouve le pieu est défini ;
- les coordonnées ($X_{M81}$, $Y_{M81}$) du point de référence de la table 8 située au Sud-Est doivent vérifier :

$$\left|X_{M8_1} - X_{M3} - Dew_{th}\right| < 0{,}5$$

$$\left|Y_{M8_1} - Y_{M3} - Dnss_{th}\right| < 0{,}5$$

Une fois le point de référence identifié M81, le $\Delta z$ par rapport au point de référence M3 de la table A considérée est calculé : $\Delta\mathbf{zOEDN = Z_{M_3} - Z_{M81}}$.

Le procédé passe à l'itération suivante, c'est-à-dire à la table suivante, balayant ainsi la totalité des tables de l'ensemble des modules solaires 50 de la centrale solaire 10. Pour les tables A n'ayant pas de voisine 8 au Sud-Est et/ou pour les points de référence M1 et M2, aucune valeur n'est renseignée.

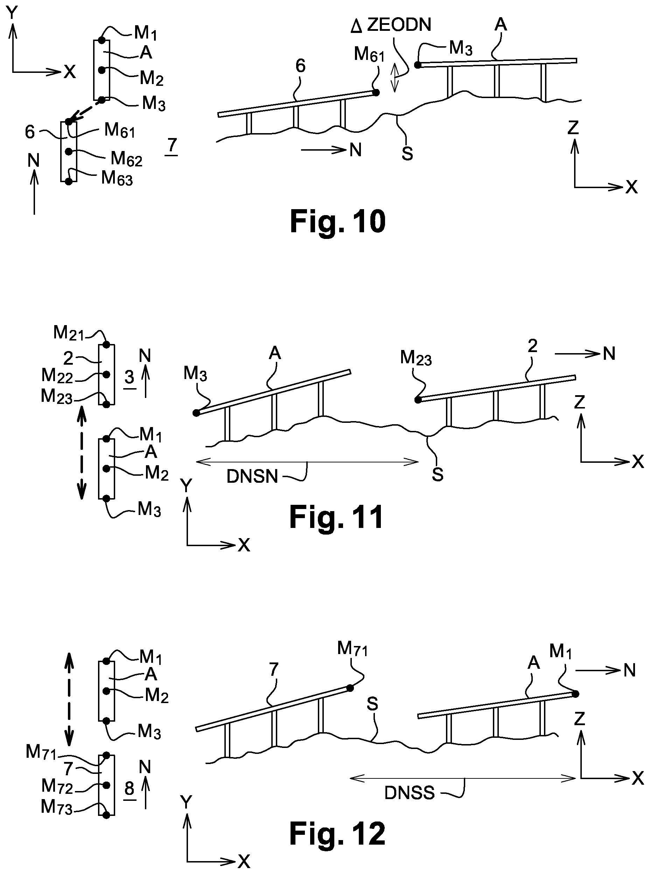

Maintenant, nous allons, en référence à la figure 10, évaluer le paramètre $\Delta\text{zEODN}$ qui traduit une différence de hauteur entre deux tables implantées en diagonale Sud-Ouest ; il est pris en compte dans la stratégie de pilotage de la centrale solaire 10 lorsque le Soleil se trouve au Nord-Est et que la table A risque de provoquer des ombrages sur la table 6 au Sud-Ouest. A nouveau, le calcul de ce paramètre $\Delta\text{zEODN}$ est en fonction des hauteurs en bord de table. Pour le point de référence M3 de chaque table A, le point de référence M61 de la table 6 au Sud-Ouest est recherché pour ensuite soustraire leurs hauteurs. En effet, dans cette situation, le bord Sud de la table A étendu à l'Ouest est en regard du bord Nord de la table 6 au Sud-Ouest.

Comme précédemment, le déroulement et les hypothèses du calcul, effectué pour le point de référence M1 de l'ensemble des tables de la centrale solaire, sont les suivants :

- la recherche du point de référence de la table 6 située au Sud-Ouest est basée sur la comparaison de l'abscisse et de l'ordonnée des points;
- pour prendre en compte les tolérances de battage des pieux P1,P2,P3 et les incertitudes de calcul, un cercle de rayon 50 cm à l'intérieur duquel se trouve le pieu est défini ;
- les coordonnées ($X_{M61}$, $Y_{M61}$) du point de référence de la table 6 située au Sud-Ouest doivent vérifier :

$$\left|X_{M6_1} - X_{M3} - Dew_{th}\right| < 0{,}5$$

$$\left|Y_{M6_1} - Y_{M3} - Dnss_{th}\right| < 0{,}5$$

Une fois le point de référence identifié M61, le $\Delta z$ par rapport au point de référence M3 de la table A considérée est calculé : $\Delta\mathbf{zEODN = Z_{M_3} - Z_{M6_1}}$.

Le procédé passe à l'itération suivante, c'est-à-dire à la table suivante, balayant ainsi la totalité des tables de l'ensemble des modules solaires 50 de la centrale solaire 10. Pour les tables A n'ayant pas de voisine 6 au Sud-Ouest et/ou pour les points de référence M1 et M2, aucune valeur n'est renseignée.

Il est à noter que les valeurs théoriques des distances $Dnsn_{th}$, $Dnss_{th}$ et $Dew_{th}$, issues de l'étude 103, ont été utilisées pour les calculs précédents. Associées à une tolérance de 0,5m, les points de référence ont été repérés sur l'ensemble des tables A de la centrale solaire 10 et les différences de hauteur $\Delta z$ ont pu être calculées pour toutes les tables A de la centrale solaire 10. Il convient désormais d'affiner ces valeurs de distances Dnsn, Dnss et Dew. Là encore, les valeurs pour chacune des tables A de la centrale solaire 10 vont être calculées.

En référence à la figure 13, la distance Est/Ouest, DEW, correspond à une différence des abscisses des points de référence milieux M2 de deux tables voisines, ici la table A et sa voisine directe 5 à l'Est, situées sur la même ligne Est-Ouest. Comme vu précédemment, ce sont les pieux milieux P2 qui déterminent l'alignement Nord/Sud des tables A. Là encore, le calcul est effectué sur l'ensemble des tables A de la centrale solaire 10. Le paramètre DEW est donné par l'équation :

**DEW = $X_{M5_2}$ - $X_{M2}$**.

Il est possible de considérer, en variante, la table A et sa voisine directe à l'Ouest, la table 4, pour calculer le paramètre DEW.

En référence à la figure 11, la distance DNSN correspond à la différence des ordonnées des points de référence M3 de deux tables voisines, alignées sur la direction Nord/Sud. Il convient dans un premier temps de repérer la table 2 située au Nord de la table A considérée, puis de soustraire les ordonnées des points M3. Là encore ce calcul est effectué sur l'ensemble des tables A de la centrale solaire 10. Le paramètre DNSN est donné par l'équation : **DNSN = $Y_{M2_3}$ -$Y_{M3}$**.

Enfin, en référence à la figure 12, la distance DNSS correspond à la différence des ordonnées des points de référence M1 de deux tables voisines, alignées sur la direction Nord/Sud. Il convient dans un premier temps de repérer la table 7 située au Sud de la table A considérée, puis de soustraire les ordonnées des points M1. Là encore, ce calcul est effectué sur l'ensemble des tables A de la centrale solaire 10. Le paramètre DNSS est donné par l'équation : **DNSS = $Y_{M1}$ - $Y_{M7_1}$**.

L'ensemble des paramètres de positionnement relatif ΔzL-OE, AzL-EO, ΔzOEDS, ΔzEODS, ΔzOEDN, ΔzEODN, DEW, DNSN et DNSS est calculé pour chacune des tables A de l'ensemble des modules solaires 50 de la série de suiveurs solaire 20,30,40 de la centrale solaire 10. Une fois cette étape effectuée, le procédé d'évaluation des paramètres de pilotage 100 selon l'invention va, pour chacun des suiveurs solaires 20,30,40 de la centrale solaire 10, déterminer un ensemble de paramètres de pilotage propre au suiveur solaire 20,30,40 considéré à partir des inclinaisons et des ensembles des paramètres de positionnement relatif des tables A de l'ensemble de modules solaires 50 formant le suiveur solaire 20,30,40 considéré. Dans le cas illustré dans les figures, pour chaque suiveur solaire 20,30,40 de la centrale solaire 10, le procédé d'évaluation des paramètre de pilotage 100 selon l'invention calcule une inclinaison $\alpha_{moy}$ moyenne à partir des inclinaisons $\alpha$ des tables A de l'ensemble des modules solaire 50 formant le suiveur solaire 20,30,40 considéré. Puis, le procédé d'évaluation des paramètres de pilotage 100 selon l'invention détermine un premier sous-ensemble de paramètres de pilotage ΔzL-OE$_{max}$, ΔzL-EO$_{max}$, ΔzOEDS$_{max}$, ΔzEODS$_{max}$, ΔzOEDN$_{max}$ et ΔzEODN$_{max}$ correspondant aux valeurs maximales des paramètres de positionnement relatif respectivement ΔzL-OE, ΔzL-EO, ΔzOEDS, ΔzEODS, ΔzOEDN et ΔzEODN de l'ensemble des modules solaires 50 formant le suiveur solaire 20,30,40 considéré. Ensuite, le procédé d'évaluation des paramètres de pilotage 100 selon l'invention détermine un deuxième sous-ensemble de paramètres de pilotage DEW$_{min}$, DNSN$_{min}$ et DNSS$_{min}$ correspondant aux valeurs minimales des paramètres de positionnement relatif respectivement DEW, DNSN et DNSS de l'ensemble des modules solaires 50 formant le suiveur solaire 20,30,40 considéré.

Le tableau de la figure 14 illustre un exemple de résultat pratique issu du procédé d'évaluation des paramètres de pilotage 100 selon l'invention. Les différents suiveurs solaires 20,30,40 de la centrale solaire 10 sont étiquetés « Zi_Rj_Tk » dans ce tableau. Pour le suiveur solaire « Z1_R2_T2 », ce dernier comporte un ensemble de vingt-sept modules solaires 50, numérotés de 1 à 27 dans le tableau. L'ensemble des paramètres de positionnement relatif des vingt-sept tables des modules solaires 50 a été reporté dans le tableau.

Le procédé d'évaluation des paramètres de pilotage 100 selon l'invention permet de personnaliser un ensemble de paramètres de pilotage pour chaque suiveur solaire 20,30,40 formant la centrale solaire 10. Ainsi le système de pilotage de la centrale solaire 10 adapte le pilotage du ou des seuls suiveurs solaires qui sont en cause dans un ombrage d'une table d'un de leurs modules solaires 50 sur une des tables voisines directes. Ceci permet d'optimiser au maximum la production d'énergie de la centrale solaire 10 durant la course diurne du Soleil.

**Revendications**

**1.** Procédé d'évaluation des paramètres de pilotage (100) d'une série de suiveurs solaires (20,30,40) d'une centrale solaire (10), chaque suiveur solaire de la série de suiveurs solaires comportant un ensemble de modules solaires (50), chaque module solaire comprenant une table (A, 1,2,3,4,5,6,7,8) de moyens de traitement d'un rayonnement solaire montée mobile à rotation autour d'un axe de rotation, pour suivre une course diurne du Soleil, sur des moyens de liaison (P1, P2, P3) au sol (S), **caractérisé en ce que** le procédé comporte les étapes de :

a- Relever (110), pour chacun des moyens de liaison au sol, des coordonnées dans l'espace d'un point de liaison avec la table ;
b- Pour chacun des modules solaires (50) :

i. Détermination d'une inclinaison ($\alpha$) de la table associée (A) à partir des coordonnées dans l'espace relevées des moyens de liaison au sol de la table associée ;
ii. Détermination des coordonnées d'une série de points de référence (M1, M2, M3) de la table associée à partir des coordonnées dans l'espace des moyens de liaison au sol de la table associée et de l'inclinaison de la table associée ;

c- Détermination, pour chacun des modules solaires (50), d'un ensemble de paramètres de positionnement relatif de la table associée (A) avec des tables voisines directes (1,2,3,4,5,6,7,8) de la table associée de la centrale solaire, à partir des coordonnées dans l'espace des séries de points de référence des tables considérées ;

d- Détermination (130), pour chaque suiveur solaire de la série de suiveurs solaires, des paramètres de pilotage (140) du suiveur solaire considéré à partir de l'inclinaison et de l'ensemble de paramètres de positionnement relatif des tables de l'ensemble de modules solaires du suiveur solaire considéré.

2. Procédé selon la revendication 1, **caractérisé en ce que** l'inclinaison est évaluée par rapport à une horizontale.

3. Procédé selon la revendication 1 ou 2, **caractérisé en ce que** la série de points de référence comportent un point (M1) d'un bord Nord de la table, un point (M2) central de la table et un point (M3) d'un bord Sud de la table.

4. Procédé selon la revendication 3, **caractérisé en ce que** les trois points sont alignés selon un axe Nord-Sud.

5. Procédé selon l'une des revendications 1 à 4, **caractérisé en ce que**, lors de l'étape c, les tables voisines directes considérées sont celles qui présentent un risque d'ombrage sur la table associée lors de la course diurne du Soleil.

6. Procédé selon l'une des revendications 1 à 5, **caractérisé en ce que** l'ensemble des paramètres de positionnement relatif comportent des valeurs de différence de hauteur entre les bords Nord et Sud de la table associée et les bords en regard des tables voisines directes.

7. Procédé selon l'une des revendications 1 à 6, **caractérisé en ce que** l'ensemble des paramètres de positionnement relatif comportent des valeurs de distance entre la table associée et les tables voisines directes.

8. Procédé selon la revendication 6, **caractérisé en ce que** les paramètres de pilotage du suiveur solaire considéré comportent des valeurs maximales des valeurs de différence de hauteur répartie par positionnement relatif de la table associée et de la table voisine directe considérée.

9. Procédé selon la revendication 7, **caractérisé en ce que** les paramètres de pilotage du suiveur solaire considéré comportent des valeurs minimales des valeurs de distance répartie par positionnement relatif de la table associée et de la table voisine directe considérée.

10. Procédé selon l'une des revendications 1 à 9, **ca-**

**ractérisé en ce que** les paramètres de pilotage du suiveur solaire considéré comportent une valeur moyenne des inclinaisons des tables de l'ensemble des modules solaire du suiveur solaire considéré.

**Patentansprüche**

1. Verfahren zur Beurteilung der Parameter zur Steuerung (100) von einer Reihe von Sonnenfolgern (20, 30, 40) einer Solaranlage (10), wobei jeder Sonnenfolger der Reihe von Sonnenfolgern eine Anordnung von Solarmodulen (50) aufweist, wobei jedes Solarmodul eine Tafel (A, 1, 2, 3, 4, 5, 6, 7, 8) mit Mitteln zum Verarbeiten einer Sonnenstrahlung, die drehbeweglich um eine Drehachse angebracht ist, um den Tageslauf der Sonne zu verfolgen, auf Verbindungsmitteln (P1, P2, P3) mit dem Boden (S) aufweist,

**dadurch gekennzeichnet, dass** das Verfahren die folgenden Schritte aufweist:

a- Erfassen (110) der Raumkoordinaten eines Verbindungspunktes mit der Tafel für jedes der Verbindungsmittel mit dem Boden,
b- für jedes der Solarmodule (50):

i. Bestimmen von einer Neigung ($\alpha$) der zugehörigen Tafel (A) ausgehend von den erfassten Raumkoordinaten der Verbindungsmittel mit dem Boden der zugehörigen Tafel;
ii.Bestimmen der Koordinaten von einer Reihe von Referenzpunkten (M1, M2, M3) der zugehörigen Tafel ausgehend von den Raumkoordinaten der Verbindungsmittel mit dem Boden der zugehörigen Tafel und der Neigung der zugehörigen Tafel;

c- Bestimmen für jedes der Solarmodule (50) von einem Satz von Parametern der relativen Positionierung der zugehörigen Tafel (A) zu Tafeln (1, 2, 3, 4, 5, 6, 7, 8), die direkt benachbart von der zugehörigen Tafel der Solaranlage sind, ausgehend von Raumkoordinaten der Reihen von Referenzpunkten der betreffenden Tafeln;
d- Bestimmen (130) für jeden Sonnenfolger der Reihe von Sonnenfolgern der Steuerungsparameter (140) des betreffenden Sonnenfolgers ausgehend von der Neigung und von dem Satz von Parametern der relativen Positionierung der Tafeln der Anordnung von Sonnenmodulen des betreffenden Sonnenfolgers.

2. Verfahren nach Anspruch 1, **dadurch gekennzeichnet, dass** die Neigung in Bezug auf eine Horizontale beurteilt wird.

**3.** Verfahren nach Anspruch 1 oder 2, **dadurch gekennzeichnet, dass** die Reihe von Referenzpunkten einen Punkt (M1) einer Nordkante der Tafel, einen Mittelpunkt (M2) der Tafel und einen Punkt (M3) einer Südkante der Tafel aufweist.

**4.** Verfahren nach Anspruch 3, **dadurch gekennzeichnet, dass** die drei Punkte nach einer Nord-Süd-Achse ausgerichtet sind.

**5.** Verfahren nach einem der Ansprüche 1 bis 4, **dadurch gekennzeichnet, dass** bei dem Schritt c die betreffenden direkt benachbarten Tafeln jene sind, die eine Gefahr eines Schattens auf der zugehörigen Tafel während des Tageslaufs der Sonne darstellen.

**6.** Verfahren nach einem der Ansprüche 1 bis 5, **dadurch gekennzeichnet, dass** der Satz von Parametern der relativen Positionierung Werte des Höhenunterschieds zwischen der Nord- und Südkante der zugehörigen Tafel und den Kanten gegenüber von den direkt benachbarten Tafeln aufweist.

**7.** Verfahren nach einem der Ansprüche 1 bis 6, **dadurch gekennzeichnet, dass** der Satz von Parametern der relativen Positionierung Werte des Abstands zwischen der zugehörigen Tafel und den direkt benachbarten Tafeln aufweist.

**8.** Verfahren nach Anspruch 6, **dadurch gekennzeichnet, dass** die Steuerungsparameter des betreffenden Sonnenfolgers Maximalwerte der Werte des Höhenunterschieds aufweisen, die durch relative Positionierung der zugehörigen Tafel und der betreffenden, direkt benachbarten Tafel verteilt sind.

**9.** Verfahren nach Anspruch 7, **dadurch gekennzeichnet, dass** die Steuerungsparameter des betreffenden Sonnenfolgers Mindestwerte der Werte des Abstands aufweisen, die durch relative Positionierung der zugehörigen Tafel und der betreffenden, direkt benachbarten Tafel verteilt sind.

**10.** Verfahren nach einem der Ansprüche 1 bis 9, **dadurch gekennzeichnet, dass** die Steuerungsparameter des betreffenden Sonnenfolgers einen Mittelwert der Neigungen der Tafeln der Anordnung der Sonnenmodule des betreffenden Sonnenfolgers aufweisen.

**Claims**

**1.** Method of evaluating control parameters (100) of a series of solar trackers (20, 30, 40) of a solar power station (10), each solar tracker of the series of solar trackers including a set of solar modules (50), each solar module including a table (A, 1, 2, 3, 4, 5, 6, 7, 8) of solar radiation processing means mounted to be rotatable about a rotation axis to track a diurnal passage of the Sun on means (P1, P2, P3) of connection to the ground (S), **characterized in that** the method includes the steps of:

> a - for each of the ground connection means, determining (110) coordinates in space of a point of connection with the table;
> b - for each of the solar modules (50):
>
>> i. determining an inclination ($\alpha$) of the associated table (A) from the coordinates in space so determined of the ground connection means of the associated table;
>> ii. determining the coordinates of a series of reference points (M1, M2, M3) of the associated table from the coordinates in space of the ground connection means of the associated table and the inclination of the associated table;
>
> c - for each of the solar modules (50), determining a set of relative positioning parameters of the associated table (A) with tables (1, 2, 3, 4, 5, 6, 7, 8) directly adjacent the associated table of the solar power station from the coordinates in space of the series of reference points of the tables concerned;
> d - for each solar tracker of the series of solar trackers, determining (130) the control parameters (140) of the solar tracker concerned from the inclination and the set of relative positioning parameters of the tables of the set of solar modules of the solar tracker concerned.

**2.** Method according to Claim 1, **characterised in that** the inclination is evaluated relative to a horizontal.

**3.** Method according to Claim 1 or 2, **characterised in that** the series of reference points includes a point (M1) on a North edge of the table, a central point (M2) of the table and a point (M3) on a South edge of the table.

**4.** Method according to Claim 3, **characterised in that** the three points are aligned along a North-South axis.

**5.** Method according to any one of Claims 1 to 4, **characterised in that**, during the step c, the directly adjacent tables concerned are those for which there is a risk of shading the associated table during the daily passage of the Sun.

**6.** Method according to any one of Claims 1 to 5, **characterised in that** the set of relative positioning parameters includes height difference values between the North and South edges of the associated table and the facing edges of the directly adjacent tables.

7. Method according to any one of Claims 1 to 6, **characterised in that** the set of relative positioning parameters includes distance values between the associated table and the directly adjacent tables.

8. Method according to Claim 6, **characterised in that** the control parameters of the solar tracker concerned include maximum values of the distributed height difference values by relative positioning of the associated table and the directly adjacent table concerned.

9. Method according to Claim 7, **characterised in that** the control parameters of the solar tracker concerned include minimum values of the distributed distance values by relative positioning of the associated table and the directly adjacent table concerned.

10. Method according to any one of Claims 1 to 9, **characterised in that** the control parameters of the solar tracker concerned include an average value of the inclinations of the tables of all the solar modules of the solar tracker concerned.

**Fig. 1**

**Fig. 2**

**Fig. 3a**

**Fig. 3b**

**Fig. 4**

**Fig. 5**

**Fig. 6**

EP 3 084 317 B1

**Fig. 7**

**Fig. 8**

**Fig. 9**

**Fig. 10**

**Fig. 11**

**Fig. 12**

Fig. 13

| Etiquettes de lignes ▽ | Moy I [°] | Min DEW | Min DNSN | Min DNSS | Max△Z L-EO | Max△Z L-OE | Max△Z EO-DN | Max△Z EO-DS | Max△Z EO-DN | Max△Z EO-DS |
|---|---|---|---|---|---|---|---|---|---|---|
| Z1_R1_T1 | 0.142 | 3.900 | 4000.000 | 24.222 | -0.001 | 0.009 | 0.035 | 0.000 | 0.051 | 0.000 |
| Z1_R2_T1 | 0.107 | 3.900 | 4000.000 | 26.222 | 0.007 | 0.005 | 0.075 | 0.000 | 0.114 | 0.000 |
| Z1_R2_T2 | 0.101 | 3.900 | 24.222 | 26.222 | 0.036 | 0.037 | 0.117 | -0.025 | 0.093 | -0 021 |
| 1 | 0.389 | 3.900 | 4000.000 | 26.222 | 0.004 | 0.010 | 0.089 | 0.000 | 0.093 | 0.000 |
| 2 | 0.343 | 3.900 | 4000.000 | 26.222 | 0.009 | 0.010 | 0.117 | 0.000 | 0.086 | 0.000 |
| 3 | 0.296 | 3.900 | 4000.000 | 26.222 | 0.009 | 0.037 | 0.110 | 0.000 | 0.062 | 0.000 |
| 4 | 0.476 | 3.900 | 4000.000 | 26.222 | 0.036 | 0.019 | 0.058 | 0.000 | 0.003 | 0.000 |
| 5 | 0.387 | 3.900 | 4000.000 | 26.222 | 0.017 | 0.019 | 0.042 | 0.000 | -0.001 | 0.000 |
| 6 | 0.299 | 3.900 | 4000.000 | 26.222 | 0.017 | 0.019 | 0.037 | 0.000 | -0.006 | 0.000 |
| 7 | 0.210 | 3.900 | 4000.000 | 26.222 | 0.017 | 0.031 | 0.033 | 0.000 | -0.022 | 0.000 |
| 8 | 0.053 | 3.900 | 4000.000 | 26.222 | 0.029 | 0.004 | 0.040 | 0.000 | -0.004 | 0.000 |
| 9 | 0.048 | 3.900 | 4000.000 | 26.222 | 0.002 | 0.004 | 0.009 | 0.000 | -0.011 | 0.000 |
| 10 | 0.032 | 3.900 | 4000.000 | 26.222 | 0.002 | 0.004 | 0.001 | 0.000 | -0.014 | -0.024 |
| 11 | 0.049 | 3.900 | 24.222 | 26.222 | 0.003 | 0.005 | -0.013 | 0.000 | -0.028 | -0.021 |
| 12 | 0.027 | 3.900 | 24.222 | 26.222 | 0.004 | 0.005 | -0.015 | -0.027 | -0.034 | -0.025 |
| 13 | 0.006 | 3.900 | 24.222 | 26.222 | 0.004 | 0.006 | -0.020 | -0.031 | -0.017 | -0.030 |
| 14 | 0.032 | 3.900 | 24.222 | 26.222 | 0.005 | 0.001 | -0.036 | -0.026 | -0.022 | -0.024 |
| 15 | 0.032 | 3.900 | 24.222 | 26.222 | -0.001 | 0.001 | -0.023 | -0.025 | -0.022 | -0.024 |
| 16 | 0.032 | 3.900 | 24.222 | 26.222 | 0.001 | 0.001 | -0.023 | -0.026 | -0.021 | -0.024 |
| 17 | 0.035 | 3.900 | 24.222 | 26.222 | 0.000 | 0.001 | -0.024 | -0.025 | -0.022 | -0.024 |
| 18 | 0.028 | 3.900 | 24.222 | 26.222 | 0.001 | 0.002 | -0.022 | -0.027 | -0.022 | -0.025 |
| 19 | 0.021 | 3.900 | 24.222 | 26.222 | 0.001 | 0.002 | -0.021 | -0.028 | -0.028 | -0.026 |
| 20 | 0.015 | 3.900 | 24.222 | 26.222 | 0.001 | 0.002 | -0.020 | -0.029 | -0.030 | -0.028 |
| 21 | 0.008 | 3.900 | 24.222 | 26.222 | 0.001 | 0.002 | -0.027 | -0.031 | -0.032 | -0.029 |
| 22 | 0.002 | 3.900 | 24.222 | 26.222 | 0.001 | 0.002 | -0.029 | -0.032 | -0.034 | -0.030 |
| 23 | -0.005 | 3.900 | 24.222 | 26.222 | 0.001 | 0.002 | -0.031 | -0.033 | -0.035 | -0.032 |
| 24 | -0.012 | 3.900 | 24.222 | 26.222 | 0.001 | 0.002 | -0.032 | -0.035 | -0.037 | -0.033 |
| 25 | -0.018 | 3.900 | 24.222 | 26.222 | 0.001 | 0.003 | -0.034 | -0.036 | -0.041 | -0.035 |
| 26 | -0.028 | 3.900 | 24.222 | 26.222 | 0.001 | 0.014 | -0.035 | -0.038 | -0.041 | -0.028 |
| 27 | -0.052 | 3.900 | 24.222 | 26.222 | -0.004 | 0.000 | -0.044 | -0.051 | 0.000 | -0.042 |
| -Z1_R3_T1 | 0.016 | 3.900 | 26.222 | 4000.000 | 0.009 | 0.027 | 0.000 | 0.009 | 0.000 | 0.043 |
| -Z1_R3_T2 | 0.078 | 3.900 | 26.222 | 24.222 | 0.033 | 0.011 | 0.074 | 0.041 | 0.045 | 0.046 |
| -Z1_R4_T1 | 0.277 | 3.900 | 24.222 | 26.222 | 0.048 | 0.022 | 0.073 | 0.072 | 0.055 | 0.042 |
| -Z1_R5_T1 | 0.034 | 3.900 | 4000.000 | 24.222 | 0.036 | 0.021 | 0.113 | 0.000 | 0.110 | 0.000 |
| -Z1_R5_T2 | 0.336 | 3.900 | 26.222 | 24.222 | 0.038 | 0.013 | 0.023 | 0.092 | 0.021 | 0.054 |
| -Z1_R6_T1 | 0.238 | 3.900 | 24.222 | 26.222 | 0.058 | 0.063 | 0.085 | 0.138 | 0.094 | 0.130 |
| -Z1_R6_T2 | 0.043 | 3.900 | 24.222 | 26.222 | 0.019 | 0.017 | 0.067 | 0.160 | 0.044 | 0.085 |

Fig. 14

Fig. 15

## RÉFÉRENCES CITÉES DANS LA DESCRIPTION

**Documents brevets cités dans la description**

- US 20130048048 A
- FR 2992403

- FR 1255956